Europäisches Patentamt

European Patent Office

Office européen des brevets

(19)

(11) Numéro de publication: **0 110 751**
**B1**

(12) **FASCICULE DE BREVET EUROPEEN**

(51) Int. Cl.⁴: **B 65 H 27/00,** B 65 H 23/26

(45) Date de publication du fascicule du brevet:
**07.01.88**

(21) Numéro de dépôt: **83402112.3**

(22) Date de dépôt: **28.10.83**

(54) **Dispositif d'étirage.**

(30) Priorité: **29.10.82 FR 8218145**
**29.07.83 FR 8312584**

(43) Date de publication de la demande:
**13.06.84 Bulletin 84/24**

(45) Mention de la délivrance du brevet:
**07.01.88 Bulletin 88/1**

(84) Etats contractants désignés:
**AT BE CH DE FR GB IT LI LU NL SE**

(56) Documents cités:
**DE - C - 234 115**
**FR - A - 2 281 275**
**FR - A - 2 372 107**
**GB - A - 709 212**
**GB - A - 2 081 420**

(73) Titulaire: **NEWTEC INTERNATIONAL, Boulevard Lepic,**
**F-73106 Aix-les-Bains (FR)**

(72) Inventeur: **Thimon, Hubert, 102, avenue de Marlioz,**
**F-73100 Aix les Bains (FR)**
Inventeur: **Jacquier, Paul, Avenue du Grand Port,**
**F-73100 Aix les Bains (FR)**

(74) Mandataire: **Derambure, Christian, Cabinet BUGNION**
**ASSOCIES SARL 116, boulevard Haussmann,**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un dispositif d'étirage d'un film plan ou plaque plane, déformable, se déplaçant le long d'au moins deux rouleaux d'étirage cylindriques, à base circulaire et de révolution tournant autour de leurs axes, le film ou plaque se déplaçant dans une direction perpendiculaire à l'axe de rotation des rouleaux.

On sait que dans de nombreuses industries il est nécessaire d'étirer des produits en forme de feuilles, en particulier dans l'industrie des produits textiles ou métallurgiques, en vue de l'amincissement ou du laminage de ces produits. Il est parfois nécessaire de réaliser une prétension ou des précontraintes de produits plastiques, métallurgiques ou textiles. Enfin dans l'industrie de l'emballage, on étire des films plastiques avant de les disposer autour de charges palettisées et de les faire rétracter naturellement ou non.

En général, pour effectuer ces opérations, il est nécessaire d'obtenir des vitesses distinctes entre deux points distincts du film. Pour ce faire, il est connu d'utiliser deux rouleaux, tournant autour d'axes parallèles, avec une vitesse de rotation différente. Ainsi, en général, la vitesse de rotation du rouleau en aval est supérieure à la vitesse de rotation du rouleau en amont. La variation des vitesses angulaires des rouleaux en rotation est obtenue en particulier par des dispositifs mécaniques, électroniques, hydrauliques, par des boîtes à vitesse, des engrenages, etc... Cependant, les dispositifs connus ne permettent pas de faire varier le rapport des vitesses différentielles tangentielles d'une valeur très supérieure à 1, par exemple allant jusqu'à 3. De plus, dans le cas de banderolage de palettes en phase de démarrage, il n'est pas possible d'obtenir un rapport de vitesses différentielles égal à 1 sans utiliser des dispositifs d'embrayage. Un tel dispositif d'étirage est par exemple décrit dans le brevet français N° 2 281 275.

L'invention vise à pallier ces inconvénients.

L'invention concerne un dispositif du type ci-dessus énoncé, caractérisé par le fait que le rayon $R_0$ du rouleau amont et le rayon $R_1$ du rouleau aval sont variables dans le temps, le rapport des vitesses de rotation angulaires $N_1/N_0$ des rouleaux étant constant. Le rapport d'étirage, plus particulièrement le rapport de la vitesse différentielle tangentielle $V_1$ en un point du film aval après étirage et la vitesse différentielle tangentielle $V_0$ en un point du film en amont, avant étirage, est proportionnel au rapport entre le rayon $R_1$ du rouleau aval et le rayon $R_0$ du rouleau amont.

Le dispositif selon l'invention apporte des avantages importants par rapport aux dispositifs connus. En effet, l'étirage est réglé facilement en modifiant les rayons des rouleaux l'un par rapport à l'autre. Par ailleurs, on peut éventuellement utiliser plusieurs rouleaux qui, par variation de leur rayon, permettent d'obtenir des vitesses différentielles variables.

La présente demande a fait l'objet d'une demande divisionnaire N° 85 402 570 (publiée sous le numéro 205 716) concernant également un dispositif d'étirage mettant en œuvre notamment un rouleau d'étirage excentré.

La description suivante, en regard des dessins annexés à titre d'exemples non limitatifs, permettra de comprendre comment l'invention peut être mise en pratique.

– La figure 1 est une vue schématique en perspective d'un mode de réalisation de l'invention.

– Les figures 2A et 2B montrent la variation des rayons des rouleaux respectivement pour un étirage minimum et pour un étirage maximum.

– La figure 3 montre une première variante de réalisation d'un rouleau.

– la figure 4 montre une seconde variante de réalisation d'un rouleau.

– Les figures 5A et 5B représentent une première variante de réalisation du mode de réalisation de l'invention avec étirage minimum (figure 5A) et étirage maximum (figure 5B).

– les figures 5C et 5D sont des vues schématiques de dessus d'une part des rouleaux et d'autre part des moyens de commande des organes permettant l'expansion ou la contraction des rouleaux.

– Les figures 6A et 6B représentent une seconde variante de réalisation du mode de réalisation de l'invention, avec étirage minimum (figure 6A) et étirage maximum (figure 6B).

– La figure 7 est une vue latérale d'une troisième variante de réalisation d'un rouleau.

– La figure 8 est une vue agrandie d'un détail du rouleau de la troisième variante de la figure 7.

– La figure 9 est une vue latérale d'une quatrième variante de réalisation d'un rouleau du même type que celle de la figure 7.

– La figure 10 illustre schématiquement le fonctionnement d'un dispositif selon l'invention équipé de rouleaux conformes à celui de la figure 9.

Le dispositif selon l'invention permet d'obtenir des vitesses différentielles tangentielles variables en divers points d'un film plan ou d'une plaque plane déformable, en particulier un film plastique déformable élastiquement ou plastiquement. On sait que la déformation élastique est réversible et que le film, lorsqu'il n'est plus étiré revient à sa position initiale, tandis que la déformation plastique est partiellement irréversible et le film lorsqu'il n'est plus étiré à une longueur finale supérieure à sa longueur initiale.

Par vitesse tangentielle différentielle, on entend la vitesse du film qui se déplace le long de deux rouleaux d'étirage amont et aval cylindriques à base circulaire et de révolution tournant autour de leurs axes, le film se déplaçant dans une direction perpendiculaire à l'axe de rotation du rouleau et s'appuyant sur des génératrices des rouleaux.

Un film 1 à étirer parvient en amont dans le dispositif d'étirage et ressort de celui-ci en aval. La vitesse tangentielle du film 1 en amont étant égale à $V_0$, la vitesse tangentielle du film 1 en aval étant égale à $V_N$ différente de $V_0$. Le dispositif 2 permet d'obtenir des vitesses tangentielles différentielles $V_N$ variables en divers points du film 1. Le film 1, de préférence en matière synthétique, est déformable élastiquement ou plastiquement. La longueur $L_0$ entre deux points AB du film en amont est inférieure à la longueur $L_N$ entre les deux mêmes points AG du film 1 en aval. Le dispositif 2 permet l'étirage du film 1, c'est-à-dire que le segment AB de longueur $L_0$ parvient progressivement à la longueur $L_1$.

Selon l'invention, le film 1 est déplacé le long d'un dispositif d'étirage 2 comprenant deux rouleaux respectivement amont 7 et aval 8, cylindriques, de révolution, à base circulaire, d'axes de révolution et de rotation XX, YY, parallèles, le rayon $R_0$ du rouleau amont 7 et le rayon $R_1$ du rouleau aval 8 étant variables dans le temps, selon une direction perpendiculaire aux axes XX, YY.

Le film 1, animé de la vitesse $V_1$, peut entraîner l'ensemble des rouleaux 7 et 8. En variante, le film 1 est entraîné à la vitesse $V_1$ par le rouleau 8 lui-même entraîné par un moteur 9. Les rouleaux 7, 8 sont entraînés en rotation de façon que le rapport K de la vitesse de rotation angulaire $N_1$ du rouleau 8 à la vitesse de rotation angulaire $N_0$ du rouleau 7 soit constant. Les sens de rotation des rouleaux 7, 8 sont opposés, le rouleau 7 tournant dans le sens de la flèche $F_3$, le rouleau 8 tournant dans le sens opposé de la flèche $F_4$.

Si E est le rapport d'étirage du film 1 on a

$$E = \frac{L_1}{L_0}$$

A l'instant t, on a $L_0 = V_0 t$ et $L_1 = V_1 t$.

$$\frac{L_1}{L_0} = E = \frac{V_1}{V_0}$$

De plus, la vitesse tangentielle est égale au rayon du rouleau multiplié par la vitesse de rotation angulaire du rouleau, c'est-à-dire que:

$$V_1 = N_1 R_1$$
$$V_0 = N_0 R_0$$

$$E = \frac{V_1}{V_0} = \frac{N_1}{N_0} \cdot \frac{R_1}{R_0} = K \frac{R_1}{R_0}, \text{ puisque } K = \frac{N_1}{N_0}$$

En conséquence, lorsqu'on fait varier les rayons $R_0$ et $R_1$ des rouleaux amont 7 et aval 8 et plus précisément leur rapport, on fait varier le rapport E des vitesses tangentielles $V_1$ et $V_0$.

La distance entre une génératrice $G_N$ et l'axe de rotation respectif XX ou YY varie dans le temps, dès lors que l'on fait varier le rapport des rayons $R_0$ et $R_1$.

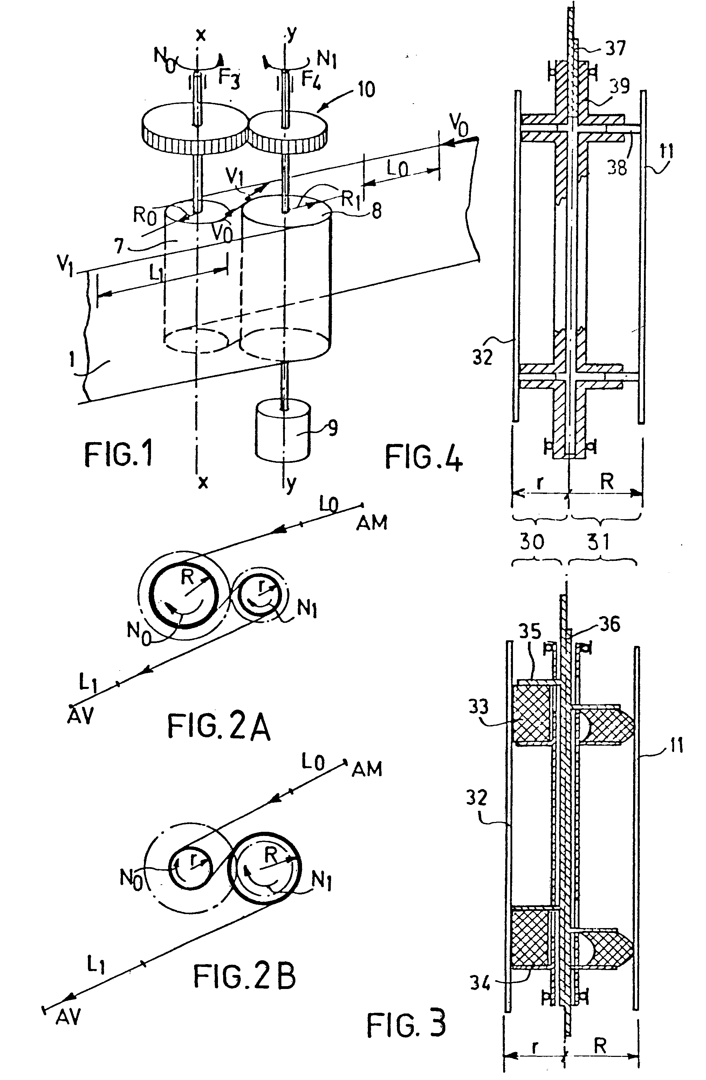

Si $R_0$ et $R_1$ peuvent varier chacun entre des mêmes valeurs limites inférieure r et supérieure R, lorsque $R_1 = r$ et $R_0 = R$, le rapport d'étirage E est minimum -E mini-(figure 2A), tandis que lorsque $R_1 = R$ et $R_0 = r$, le rapport d'étirage E est maximum – E maxi – (figure 2b).

Ainsi $E \text{ maxi} = K \frac{R}{r}$ et $E \text{ mini} = K \frac{r}{R}$, $\frac{E \text{ maxi}}{E \text{ mini}} = \frac{R^2}{r^2}$

Si l'on veut faire varier l'étirage de 0 à 100%,

$$\frac{E \text{ maxi}}{E \text{ mini}} = 2 \text{ et } \frac{R}{r} = \sqrt{2}$$

R = 113 mm environ, par exemple et donc
r = 80 mm environ.
Le rayon moyen est d'environ 97 mm.
Si l'on veut faire varier l'étirage de 0 à 200%,

$$\frac{E \text{ maxi}}{E \text{ mini}} = 3$$

R = 123 mm environ, par exemple,
r = 70 mm environ, par exemple,
et le rayon moyen est d'environ 97 mm.

Si l'on veut un rapport d'étirage E égal à 1, il faut pour le premier cas que K soit égal à 1, 4 environ et dans le second cas égal à 1, 7 environ. Les rapports K des vitesses de rotation des rouleaux 7, 8 sont réglés grâce à un dispositif d'engrenage 10.

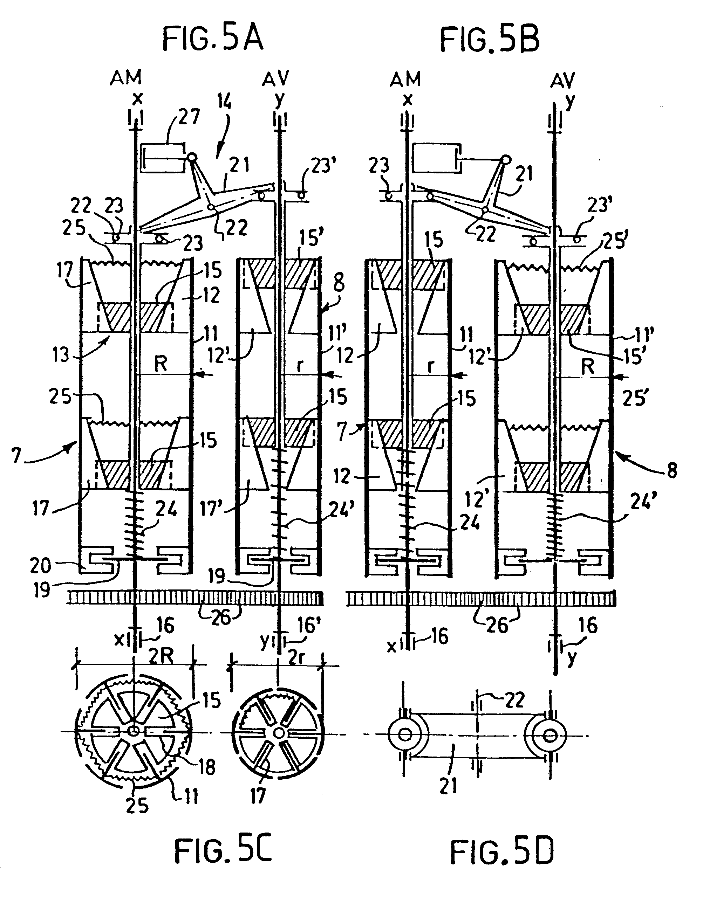

Selon une première variante de réalisation (figures 5A, 5B, 5C, 5D), le dispositif de pré-étirage ou d'étirage variable comporte deux rouleaux 7, 8 d'étirage constitués chacun d'une pluralité de portions longitudinales incurvées 11, formant la surface cylindrique du rouleau.

Des organes 12 de guidage en translation radiale des portions 11 ont pour fonction d'éloigner ou de rapprocher les portions 11 des axes XX et YY de rotation. Des moyens 13 d'entraînement en rotation des portions incurvées 11 ont pour fonction de faire pivoter les portions incurvées 11 autour des axes XX et YY respectivement. Des moyens de commande 14 ont pour fonction d'actionner les organes de guidage 12.

De préférence, les moyens 13 d'entraînement en rotation sont constitués par des moyeux 15 qui assurent l'entraînement en rotation des portions incurvées 11 autour des axes XX et YY respectivement qui sont cannelés et sont montés pivotant sur des paliers 16.

Les organes 12 de guidage en translation radiale des portions 11 sont constitués par exemple par des rampes 17 qui prennent appui dans les rainures 18 ménagées dans les moyeux 15. Chaque portion 11 comporte au moins deux moyeux 15. Les moyeux 15 coulissent simultanément le long de l'axe cannelé XX ou YY respectivement. Les rampes 17 sont susceptibles de coulisser radialement dans les rainures 18. Le rayon des rouleaux 7, 8 varie par coulissement radial des rampes 17 dans les rainures 18 et simultanément coulissement axial des moyeux 15, le long de l'axe XX ou YY.

Chaque rouleau 7, 8 comporte au moins un flasque 19 assurant le guidage en bout des portions incurvées 11. Des butées 20 peuvent coulisser radialement par rapport au flasque 19.

Les moyens de commande 14 des organes 12 de guidage en translation radiale et axiale sont constitués par une fourchette double 21 pivotant autour d'un axe 22 perpendiculaire aux axes de rotation XX, YY des rouleaux 7, 8. La fourchette double 21 agit par l'intermédiaire d'une couronne d'appui placée à une extrémité de l'axe de rotation XX, YY des rouleaux 7, 8 sur une butée à bille 23.

Lorsque la fourchette double 21 penche du côté du rouleau 7 amont (figure 5A), elle agit sur la butée 23, ce qui provoque le coulissement axial des moyeux 15 du cylindre 7 amont, vers l'extrémité de l'axe XX opposé et dépourvu de butée 23, ce qui comprime un ressort de rappel 24. Les portions incurvées 11 et les rampes 17 sont plaquées sur les moyeux coulissants 15 grâce à des ressorts circonférentiels 25 placés à chaque niveau des rampes 17. Les moyeux 15 en coulissant le long de l'axe XX poussent les portions incurvées 11 radialement et vers l'extérieur, ce qui assure l'augmentation du rayon du rouleau 7 qui prend la valeur R. Au contraire, la fourchette 21 est reliée à son autre extrémité du côté du rouleau aval 8 de manière que les moyeux 15 correspondants soient en position inverse des moyeux 15 du cylindre 7 amont. Le ressort de rappel 24' pousse les moyeux coulissants et les organes de commande vers la position correspondant à la valeur minimum de rayon du rouleau 8 aval qui prend la valeur r.

Des engrenages 26 permettent de régler la vitesse de rotation du rouleau amont 7 par rapport à la vitesse de rotation du rouleau aval 8.

Sur la figure 5A, on a un rayon R en amont et r en aval et le rapport d'étirage E est minimum. Au contraire, par basculement en sens inverse de la fourchette 21 (figure 5B), on obtient un rayon r en amont et R en aval et le rapport d'étirage E est maximum.

Le pivotement de la fourchette 21 est commandé par un organe de commande 27 qui peut être, comme représenté, un vérin hydraulique, pneumatique ou électrique ou encore un système vis-écrou manuel, A chaque position de l'organe de commande 27 correspond une valeur des rayons des rouleaux 7 et 8, donc une valeur du cœfficient d'étirage E. Les positions de l'organe de commande 27 peuvent être contrôlées à partir de valeurs de consigne pré-établies ou programmées.

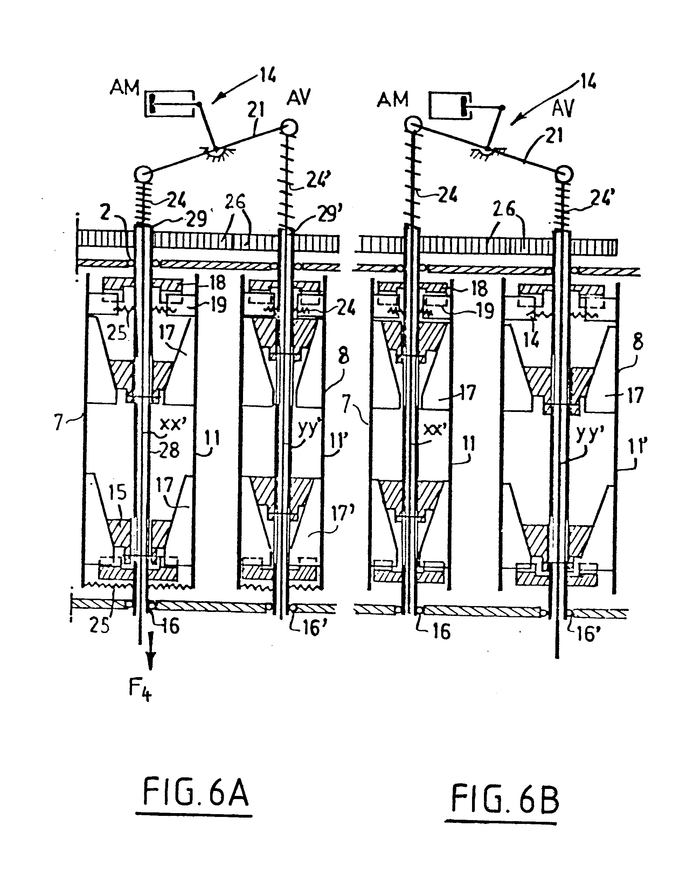

Dans une seconde variante de réalisation (figures 6A et 6B) du dispositif 2, l'engrenage 26 est placé du côté des moyens de commande 14. Les rampes 17 sont solidaires d'un arbre 28 concentrique à l'axe de rotation XX ou YY et qui comporte une butée 29 sur laquelle est en appui le ressort 24. La fourchette 21 en pivotant comprime le ressort 24, qui entraîne le déplacement des moyeux 15 axialement dans le sens de la flèche $F_4$, c'est-à-dire le sens du déplacement de la fourchette 21. Les rampes 17 coulissent radialement dans les rainures 18, ce qui entraîne l'expansion radiale du rouleau aval 7. Au contraire, le rouleau amont 8 est comprimé.

De préférence, les portions incurvées 11 comportent sur la surface externe un revêtement favorisant l'adhérence.

Sur les figures 3 et 4, d'autres variantes de réalisation des rouleaux 7, 8 sont représentées. A gauche de chaque figure, est représenté un demi rouleau 30 de plus petit rayon et à droite un demi rouleau 31, de plus grand rayon.

Dans la première variante (figure 3), le demi rouleau 30 est constitué, comme le demi rouleau 31, de portions 32, solidaires d'éléments radiaux 33 compressibles, de préférence en élastomère. Les éléments radiaux 33 sont disposés entre des cloisons radiales fixes 34 et des cloisons radiales mobiles 35 solidarisées à un arbre 36 qui peut coulisser axialement. Lorsqu'on effectue un déplacement axial de l'arbre 36 pour que les cloisons mobiles 35 soient rapprochées des cloisons fixes 34, l'élément élastomère 33 est comprimé axialement et se déforme radialement en poussant les portions 32 radialement et vers l'extérieur, ce qui augmente le rayon du rouleau. Lorsque les cloisons mobiles 35 sont éloignées des cloisons fixes 34, l'élément élastomère 33 reprend sa forme initiale. De préférence, les éléments élastomères 33 sont placés à chaque extrémité des portions 11. Dans la seconde variante (figure 4), le déplacement des portions 11 est réalisé par un dispositif hydraulique. Le déplacement de l'arbre piston 37 entraîne le déplacement du support 38 de la portion 11, un fluide hydraulique transmettant la pression entre l'arbre piston 37 et le support 38. Ce fluide hydraulique est situé dans une chambre formée par un arbre creux 39, l'arbre 37 coulissant axialement et le support 38 coulissant radialement.

Dans certaines applications, les dispositifs précédemment décrits (notamment aux figures 3, 4, 5A à 5D, 6A et 6B) ont pour inconvénient que les portions cylindriques frappent le film tendu, ce qui a pour effet de provoquer du bruit du fait de ces coups répétés. Par ailleurs, le film étiré subit un retrait transversal, à savoir que la largeur finale du film étiré est inférieure à sa largeur initiale ce qui est un inconvénient pour la bonne qualité du banderolage obtenu dans l'industrie d'emballage. Egalement, les portions formant les cylindres de révolution constituées de barres métalliques peuvent provoquer les déchirures sur le film tendu, du fait des arêtes plus ou moins coupantes des barres. Enfin, les portions ou barres d'étirage métalliques sont rappelées par des ressorts de rappel, dont la fonction est de donner un rayon inférieur au rouleau d'étirage lorsqu'on lui a auparavant donné un rayon plus important. Or, ces ressorts de rappel sont placés à l'intérieur des rouleaux d'étirage formés par les diverses portions, et la réalisation pratique de tels dispositifs est complexe.

Dans un mode de réalisation qui vise donc également à pallier ces inconvénients on prévoit que les rouleaux comportent des moyens élastiques externes de rappel des portions cylindriques vers l'axe de révolution, de préférence constitués par au moins une bande élastique, notamment en caoutchouc vulcanisé, disposée autour et à l'extérieur des portions.

Les bandes élastiques sont par exemple des anneaux circulaires espacés les uns des autres, de préférence, solidarisés aux portions, par exemple, par collage.

La présence de moyens élastiques externes de rappel sur les portions cylindriques permet de supprimer les ressorts de rappel qui provoquent la diminution du rayon des rouleaux et de diminuer de façon notable le bruit, tout en protégeant le film.

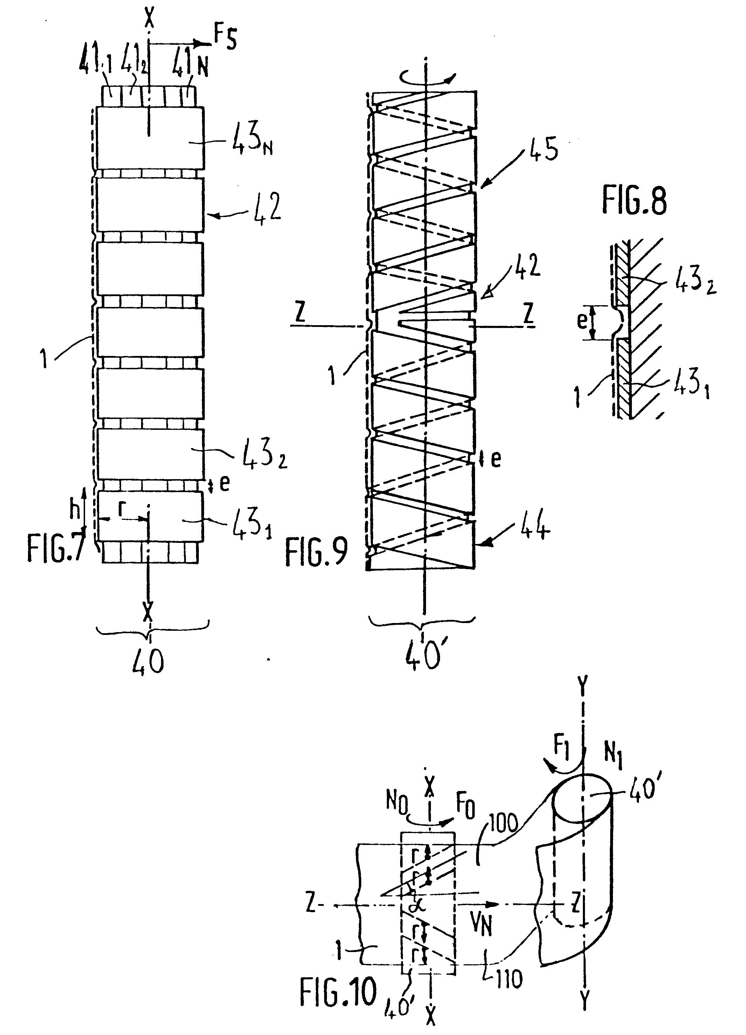

Le rouleau 40 représenté sur la figure 7 peut être soit du type des rouleaux 7 et 8 (5A–5D, 6A–6B) ou encore du type des rouleaux 30, 31 (figures 3 et 4). Le rouleau 40 est constitué d'une pluralité de portions longitudinales $41_1$, $41_2$, $41_N$ qui forment sa surface cylindrique, Le rouleau 40 comporte des moyens élastiques 42 externes de rappel des portions 41 vers l'axe XX. Lorsque grâce aux moyens d'écartement précédemment décrits, les portions $41_1$, $42_2$, $41_N$ sont déplacées et le rayon du rouleau augmenté, les moyens élastiques externes 42 rappellent les portions $41_1$, $41_2$, $41_N$ en direction de l'axe XX. Les moyens élastiques externes 42 sont constitués par une bande élastique disposée autour et à l'extérieur des portions $41_1$, $41_2$, $41_N$. Dans une première variante (figure 7), la bande élastique 42 est constituée par plusieurs anneaux $43_1$, $43_2$, $43_N$, circulaires, d'exes XX, espacés les uns des autres. Ces anneaux circulaires, par exemple de hauteur h ont un rayon r sensiblement égale au rayon $r_0$ du rouleau d'étirage, c'est-à-dire que le rayon r des bandes $43_N$ est légèrement inférieur au plus petit rayon que le rouleau d'étirage puisse avoir. Ainsi, les anneaux $43_1$, $43_2$, $43_N$ maintiennent les portions $41_1$, $41_2$, $41_N$ sensiblement jointives, lorsque les anneaux $43_1$, $43_2$, $43_N$ ne sont pas étirés.

Lorsque l'on soumet les portions $41_1$, $41_N$ à un déplacement axial dans le sens de la flèche $F_5$ dirigée vers l'extérieur, pour éloigner les portions $41_1$, $41_2$, $41_N$ de l'axe XX de révolution du rouleau 40, les anneaux $43_1$, $43_2$, $43_N$ élastiques sont soumis à une force radiale qui fait que les anneaux ont alors un rayon supérieur à leur rayon initial et sensiblement égal au rayon désiré pour le rouleau d'étirage. Les anneaux sont alors soumis à une force qui les étire.

Lorsque les moyens d'écartement des portions $41_1$ – $41_N$ sont inactifs, les anneaux ne sont plus soumis à la force $F_3$ et du fait qu'elles sont élastiques, elles ont tendance à revenir à leur forme initiale et à reprendre leur rayon r initial et de ce fait, soumettent les portions $41_1$, $41_2$, $41_N$ à une force contraire à la force $F_5$ pour les ramener en position initiale.

Les anneaux circulaires $43_1$, $43_2$, $43_N$ sont préférentiellement espacés les uns des autres d'une distance e. Cette distance est égale à quelques millimètres, par exemple plus préférentiellement de 2 à 3 millimètres environ.

La figure 8 est une vue agrandie de deux anneaux $43_1$, $43_2$, et du film 1. Le film 1 repose sur les anneaux $43_1$ et $43_2$, tandis qu'il ne repose pas sur les portions elles-mêmes lorsqu'il se trouve entre les anneaux $43_1$, $43_2$, à savoir lorsqu'il se trouve dans l'espace formé entre les anneaux $43_1$ et $43_2$.

Dans une seconde variante (figure 9), la bande élastique 42 est constituée de deux parties 44 et 45. La première partie 44 est une première bande enroulée hélicoïdalement dans un sens, et la seconde partie 45 est une seconde bande enroulée hélicoïdalement dans le sens opposé. La première partie inférieure 44 est enroulée, par exemple, dans le sens opposé au sens de rotation du rouleau 40, et la seconde partie supérieure 45 est enroulée dans le sens de rotation du rouleau 40. Les spires des bandes 44 et 45 ne sont pas jointives, et sont distantes d'une distance e, de préférence de quelques millimètres, notamment de 2 à 3 millimètres environ. Les spires héliocoïdales sont donc de pas contraire et sont réparties symétriquement par rapport à l'axe longitudinal Z–Z du film 1 qui est étiré. Les sens d'enroulement des hélices des bandes 44 et 45 sont tels que le film 1 est soumis à une composante de réaction des spires hélicoïdales sur le film, cette composante étant dirigée vers les bords externes 100 et 110 du film étiré 1 (figure 10). Par conséquent, le film 1 est soumis à un étirage transversal dans le sens des composantes de réaction des spires hélicoïdales sur le film (direction et sens des flèches r) et le film ne subit alors pas de retrait transversal lors de son étirage ou du moins il subit un retrait transversal moindre que lorsqu'il est étiré par des rouleaux ne comportant pas de bande élastique hélicoïdale. Le plan d'une spire forme un angle $\alpha$ aigu avec la direction de déplacement $V_N$ du film étiré. De préférence, l'angle $\alpha$ est inférieur à 45°.

**Revendications**

1. Dispositif d'étirage d'un film (1) plan ou plaque plane déformable, se déplaçant le long d'au moins deux rouleaux d'étirage (7, 8) cylindriques, à base circulaire et de révolution tournant autour de leurs axes XX et YY, le film (1) ou plaque se déplaçant dans une direction perpendiculaire à l'axe de rotation (XX, YY) des rouleaux (7, 8), caractérisé par le fait que le rayon $R_0$ du rouleau amont (7) et le rayon $R_1$ du rouleau aval (8) sont variables dans le temps, le rapport des vitesses de rotation angulaires $N_1/N_0$ des rouleaux (7, 8) étant constant.

2. Dispositif selon la revendication 1, caractérisé par le fait que le rapport d'étirage plus particulièrement le rapport de la vitesse différentielle tangentielle $V_1$ en un point du film en aval après étirage et la vitesse différentielle tangentielle $V_0$ en un point du film en amont avant étirage, est proportionnel au rapport entre le rayon $R_1$ du rouleau aval (8) et le rayon $R_0$ du rouleau en amont (7).

3. Dispositif selon l'une quelconque des revendications 1 et 2, caractérisé par le fait que l'on fait varier le rapport d'étirage E en faisant varier simultanément le rayon $R_1$ et le rayon $R_0$ entre deux valeurs limites r et R.

4. Dispositif selon l'une quelconque des revendications 1 et 2, caractérisé par le fait que le rapport d'étirage varie environ de 0 à 100%, les rayons $R_0$ et $R_1$ variant entre r = 80 mm environ et R = 113 mm environ.

5. Dispositif selon l'une quelconque des revendications 1 à 3, caractérisé par le fait que le rapport d'étirage varie entre 0 et 200% environ, les rayons $R_0$ et $R_1$ variant entre r = 70 mm environ et R = 123 mm environ.

6. Dispositif selon l'une quelconque des revendications 1 à 5, caractérisé par le fait que le rapport du rayon $R_0$ et du rayon $R_1$ est réglable par le déplacement de l'axe de rotation du rouleau.

7. Dispositif selon l'une quelconque des revendications 1 à 5, caractérisé par le fait que les deux rouleaux (7, 8) constitués chacun d'une pluralité de portions longitudinales (11) formant la surface cylindrique du rouleau, et qu'il est prévu:
– deux organes de guidage (12) en translation radiale des portions (11),– deux moyens d'entraînement en rotation (13) des portions (11),
– des moyens de commande (14) des organes de guidage (12) en translation radiale.

8. Dispositif selon la revendication 7, caractérisé par le fait que les moyens d'entraînement en rotation (13) sont constitués par des moyeux (15) coulissant simultanément le long de l'axe de rotation, et les organes de guidage en translation radiale étant constitués par des rampes (17) coulissant radialement dans des rainures (18) ménagées dans les moyeux (15).

9. Dispositif selon la revendication 8, caractérisé par le fait que les moyens de commande (14) des organes de guidage (12) en translation radiale sont constitués par une fourchette double (21) pivotant autour d'un axe (22) perpendiculaire à l'axe de rotation des rouleaux et agissant par l'intermédiaire d'une couronne d'appui placée à une extrémité de l'axe de rotation des rouleaux sur une butée (23) à bille, ce qui entraîne le déplacement simultané et en sens inverse des moyeux (15) de chaque rouleau (7, 8), le pivotement de la fourchette (21) double étant commandé par un organe de commande (27), un vérin notamment.

10. Dispositif selon l'une quelconque des revendications 1 à 9, caractérisé en ce qu'un rouleau d'étirage (40) est constitué d'une pluralité de portions logitudinales ($41_1$, $41_2$, $41_N$) formant la surface cylindrique du rouleau et comporte des moyens élastiques externes (42) de rappel des portions ($41_1$, $41_2$, $41_N$) vers l'axe XX du rouleau.

11. Dispositif selon la revendication 10, caractérisé par le fait que les moyens élastiques (42) sont constitués par au moins une bande élastique disposée autour et à l'extérieur des portions ($41_1$, $41_2$, $41_N$).

12. Dispositif selon la revendication 11, caractérisé par le fait que la bande élastique est constituée par des anneaux circulaires ($43_1$, $43_2$, $43_N$) d'axes XX distants les uns des autres.

13. Dispositif selon la revendication 12, caractérisé par le fait que la distance e entre deux anneaux successifs ($43_1$, $43_2$) est de quelques millimètres, notamment de 2 à 3 millimètres environ.

14. Dispositif selon la revendication 11, caractérisé par le fait que la bande est constituée de deux parties enroulées, la première partie (44) étant enroulée hélicoïdalement dans un sens, et la seconde partie (45) étant enroulée hélicoïdalement dans le sens opposé.

15. Dispositif selon la revendication 14, caractérisé par le fait que la première partie et la seconde partie sont enroulées hélicoïdalement sous forme de spires, chaque spire formant un angle $\alpha$ aigu avec le sens de déplacement du film (1) étiré, de préférence inférieur à 45°.

16. Dispositif selon l'une quelconque des revendications 14 et 15, caractérisé par le fait que les spires des parties (44 et 45) sont distantes les unes des autres.

17. Dispositif selon l'une quelconque des revendications 14 à 16, caractérisé par le fait que les spires des parties (44 et 45) sont distantes de quelques millimètres, notamment d'une distance e de 2 à 3 millimètres environ.

18. Dispositif selon l'une quelconque des revendications 11 à 17, caractérisé par le fait que les anneaux (43) et les bandes (44) et (45) sont solidarisés aux portions ($41_1$, $41_2$, $41_N$), par exemple par collage.

19. Dispositif selon l'une quelconque des revendications 11 à 18, caractérisé par le fait que les anneaux (43) et les bandes (44, 45) enroulées hélicoïdalement sont constitués d'un caoutchouc vulcanisé.

**Claims**

1. Device for stretching a deformable flat film (1) or flat sheet, moving along at least two cylindrical stretching rollers (7, 8), having a circular base and which are of revolution, rotating about their axes XX and YY, the film (1) or sheet moving in a direction perpendicular to the axis of rotation (XX, YY) of the rollers (7, 8), characterised by the fact that the radius $R_0$ of the upstream roller (7) and the radius $R_1$ of the downstream roller (8) are variable over a period of time, the ratio of the angular speeds of rotation $N_1/N_0$ of the rollers (7, 8) being constant.

2. Device according to Claim 1, characterised by the fact that the stretching ratio, more particularly the ratio of the tangential differential speed $V_1$ at a downstream point of the film after stretching and the tangential differential speed $V_0$ at an upstream point of the film before stretching, is proportional to the ratio between the radius $R_1$ of the downstream roller (8) and the radius $R_0$ of the upstream roller (7).

3. Device according to one of Claims 1 and 2, characterised by the fact that the stretching ratio E is varied by simultaneously varying the radius $R_1$ and the radius $R_0$ between two limit values r and R.

4. Device according to one of Claims 1 and 2, characterised by the fact that the stretching ratio varies approximately from 0 to 100%, the radii $R_0$ and $R_1$ varying between r = 80 mm approximately and R = 113 mm approximately.

5. Device according to one of Claims 1 to 3, characterised by the fact that the stretching ratio varies between 0 and 200% approximately, the radii $R_0$ and $R_1$ varying between r = 70 mm approximately and R = 123 mm approximately.

6. Device according to one of Claims 1 to 5, characterised by the fact that the ratio of the radius $R_0$ and of the radius $R_1$ can be adjusted by moving the axis of rotation of the roller.

7. Device according to one of Claims 1 to 5, characterised by the fact that the two rollers (7, 8), are each constituted by a plurality of longitudinal portions (11) forming the clindrical surface of the roller and that the following are provided:
  - two members (12) for guiding the portions (11) in radial translation,
  - two means (13) for setting the portions (11) in rotation,
  - control means (14) for the members (12) for guiding the portions in radial translation.

8. Device according to Claim 7, characterised by the fact that the rotary drive means (13) are constituted by hubs (15) sliding simultaneously along the axis of rotation and the guide members for radial translation being constituted by ramps (17) sliding radially in grooves (18) provided in the hubs (15).

9. Device according to Claim 8, characterised by the fact that the control means (14) for the guide members (12) for radial translation are constituted by a double fork (21) pivoting about an axis (22) perpendicular to the axis of rotation of the rollers and acting through the intermediary of a support ring located at one end of the axis of rotation of the rollers on a ball bearing (23), which causes the simultaneous displacement and in the opposite direction of the hubs (15) of each roller (7, 8), the pivoting of the double fork (21) being controlled by a control member (27), in particular a jack.

10. Device according to one of Claims 1 to 9, characterised in that a stretching roller (40) is constituted by a plurality of longitudinal portions ($41_1$, $41_2$, $41_N$) forming the cylindrical surface of the roller and comprises external elastic means (42) for returning the portions ($41_1$, $41_2$, $41_N$) towards the axis XX of the roller.

11. Device according to Claim 10, characterised by the fact that the elastic means (42) are constituted by at least one elastic band arranged around and on the outside of the portions ($41_1$, $41_2$, $41_N$).

12. Device according to Claim 11, characterised by the fact that the elastic band is constituted by circular rings ($43_1$, $43_2$, $43_N$) on the axes XX which are separated from each other.

13. Device according to Claim 12, characterised by the fact that the distance e between two successive rings ($43_1$, $43_2$) is several millimetres, in particular from 2 to 3 millimetres approximately.

14. Device according to Claim 11, characterised by the fact that the band is constituted by two wound parts, the first part (44) being wound helically in one direction and the second part (45) being wound helically in the opposite direction.

15. Device according to Claim 14, characterised by the fact that the first part and the second part are wound helically in the form of coils, each coil forming an acute angle $\alpha$ with the direction of movement of the stretched film (1), which is preferably less than 45°.

16. Device according to one of Claims 14 and 15, characterised by the fact that the coils of the parts (44 and 45) are separated from each other.

17. Device according to one of Claims 14 to 16, characterised by the fact that the coils of the parts (44 and 45) are separated by several millimetres, in particular by a distance e of 2 to 3 millimetres approximately.

18. Device according to one of claims 11 to 17, characterised by the fact that the rings (43) and the bands (44 and 45) are connected to the portions ($41_1$, $41_2$, $41_N$), for example by sticking.

19. Device according to one of Claims 11 to 18, characterised by the fact that the rings (43) and the bands (44, 45) wound helically are constituted by vulcanized rubber.

**Patentansprüche**

1. Vorrichtung zum Streckziehen einer verformbaren ebenen Folie (1) oder Platte, die in Längsrichtung von mindestens zwei zylindrischen Streckziehwalzen (7, 8) bewegbar ist, die eine kreisförmige Grundfläche besitzen und sich um ihre Achsen XX und YY drehen, wobei sich die Folie (1) oder Platte in eine Richtung senkrecht zur Rotationsachse (XX, YY) der Walzen (7, 8) bewegt, dadurch gekennzeichnet, dass der Radius $R_0$ der in Bewegungsrichtung vorderen Walze (7) und der Radius $R_1$ der in Bewegungsrichtung hinteren Walze (8) zeitlich veränderbar sind, wobei das Verhältnis der Winkelgeschwindigkeiten $N_1/N_0$ der Walzen /7, 8) konstant ist.

2. Vorrichtung nach Anspruch 1, dadurch gekennzeichnet, dass das Streckzieh-Verhältnis, insbesondere das Verhältnis der tangentialen Differenzialgeschwindigkeit $V_1$ an einem in Bewegungsrichtung hinteren Punkt der Folie nach dem Streckziehen und der tangentialen Differenzialgeschwindigkeit $V_0$ an einem in Bewegungsrichtung vorderen Punkt der Folie vor dem Streckziehen proportional zum Verhältnis zwischen dem Radius $R_1$ der hinteren Walze (8) und dem Radius $R_0$ der vorderen Walze (7) ist.

3. Vorrichtung nach einem der Ansprüche 1 und 2, dadurch gekennzeichnet, dass das Streckzieh-Verhältnis E durch gleichzeitiges Verändern des Radius $R_1$ und des Radius $R_0$ zwischen den beiden Grenzwerten r und R veränderbar ist.

4. Vorrichtung nach einem der Ansprüche 1 und 2, dadurch gekennzeichnet, dass das Streckzieh-Verhältnis sich im Bereich zwischen 0 und 100% verändert, wobei die Radien $R_0$ und $R_1$ sich zwischen etwa r = 80 mm und etwa R = 113 mm ändern.

5. Vorrichtung nach einem der Ansprüche 1 bis 3, dadurch gekennzeichnet, dass Streckzieh-Verhältnis sich zwischen etwa 0 und 200% verändert, wobei sich die Radien $R_0$ und $R_1$ zwischen etwa r = 70 mm und etwa R = 123 mm ändern.

6. Vorrichtung nach einem der Ansprüche 1 bis 5, dadurch gekennzeichnet, dass das Verhältnis des Radius $R_0$ zum Radius $R_1$ durch Verschieben der Rotationsachse der Walze regelbar ist.

7. Vorrichtung nach einem der Ansprüche 1 bis 5, dadurch gekennzeichnet, dass jede der beiden Walzen (7, 8) eine Vielzahl von längsverlaufenden Bereichen (11) aufweist, die die zylindrische Oberfläche der Walze bilden, und dass zwei radial verschiebbare Führungsorgane (12) für die Bereiche (11), zwei rotierende Zugelemente (13) für die Bereiche (11) und Steuerelemente (14) für die radial verschiebbaren Führungselemente (12) vorgesehen sind.

8. Vorrichtung nach Anspruch 7, dadurch gekennzeichnet, dass die rotierenden Zugelemente (13) durch Elemente (15) gebildet sind, die gleichzeitig längs der Rotationsachse verschiebbar sind, und dass die radial verschiebbaren Führungselemente durch Rampen (17) gebildet sind, die in Nuten (18) der Elemente (15) radial verschiebbar sind.

9. Vorrichtung nach Anspruch 8, dadurch gekennzeichnet, dass die Steuerelemente (14) für die radial bewegbaren Führungselemente (12) durch eine Doppelgabel (21) gebildet sind, die um eine Achse (22) senkrecht zur Rotationsachse der Walzen schwenkbar ist und die mittels einer Abstützkrone, die an einem Ende der Rotationsachse der Walzen angeordnet ist, auf ein axiales Kugellager (23) wirkt, was das gleichzeitige und gegenläufige Verschieben der Elemente (15) jeder Walze (7, 8) bewirkt, wobei die Schwenkbewegung der Doppelgabel (21) durch ein Steuerelement (27), nämlich eine Kolbenzylindereinheit gesteuert ist.

10. Vorrichtung nach einem der Ansprüche 1 bis 9, dadurch gekennzeichnet, dass eine Streckziehwalze (40) durch eine Vielzahl von längsverlaufenden Bereichen ($41_1$, $41_2$, $41_N$) gebildet ist, die die zylindrische Fläche der Walze bilden, und dass sie äussere elastische Elemente (42) zum Zurückstellen der Bereiche ($41_1$, $41_2$. $41_N$) zur Walzenachse XX hin aufweist.

11. Vorrichtung nach Anspruch 10, dadurch gekennzeichnet, dass die elastischen Elemente (42) durch mindestens ein elastisches Band gebildet sind, das aussen um die Bereiche ($41_1$, $41_2$, $41_N$) angeordnet ist.

12. Vorrichtung nach Anspruch 11, dadurch gekennzeichnet, dass das elastische Band durch im Abstand voneinander und um die Achsen XX angeordnete kreisförmige Ringe ($43_1$, $43_2$, $43_N$) gebildet ist.

13. Vorrichtung nach Anspruch 12, dadurch gekennzeichnet, dass der Abstand e zwischen aufeinanderfolgenden Ringen ($43_1$, $43_2$) im Bereich von einigen Millimetern, nämlich von etwa 2 bis 3 mm ist.

14. Vorrichtung nach Anspruch 11, dadurch gekennzeichnet, dass das Band durch zwei aufrollbare Bereiche gebildet ist, von denen der erste Bereich (44) in einer Richtung und der zweite Bereich (45) in entgegengesetzter Richtung wendelförmig aufgerollt ist.

15. Vorrichtung nach Anspruch 14, dadurch gekennzeichnet, dass der erste Bereich und der zweite Bereich in Form von Gewindegängen wendelförmig aufgerollt sind, wobei jeder Gewindegang einen Winkel $\alpha$ von vorzugsweise unter 45° mit der Verschieberichtung der streckgezogenen Folie (1) bildet.

16. Vorrichtung nach einem der Ansprüche 14 und 15, dadurch gekennzeichnet, dass die Gewindegänge der Bereiche (44, 45) in einem Abstand voneinander angeordnet sind.

17. Vorrichtung nach einem der Ansprüche 14 bis 16, dadurch gekennzeichnet, dass die Gewindegänge der Bereiche (44, 45) in einem Abstand von einigen Millimetern, nämlich in einem Abstand e von etwa 2 bis 3 mm angeordnet sind.

18. Vorrichtung nach einem der Ansprüche 5 bis 17, dadurch gekennzeichnet, dass die Ringe (43) und die Bänder (44) und (45) über die Bereiche ($41_1$, $41_2$ $41_N$) bspw. mittels Verkleben miteinander verbunden sind.

19. Vorrichtung nach einem der Ansprüche 11 bis 18, dadurch gekennzeichnet, dass die Ringe (43) und die wendelförmig gewickelten Bänder (44, 45) aus einem vulkanisierten Kautschuk gebildet sind.

FIG.1

FIG.2A

FIG.2B

FIG.3

FIG.4

FIG.5A     FIG.5B

FIG.5C     FIG.5D

FIG.6A

FIG.6B

FIG.7

FIG.8

FIG.9

FIG.10